## Europäisches Patentamt
## European Patent Office
## Office européen des brevets

(19)

(11) Publication number: **0 070 815**
**B1**

(12) **EUROPEAN PATENT SPECIFICATION**

(45) Date of publication of patent specification: **15.10.86**

(51) Int. Cl.⁴: **B 60 J 1/17**

(21) Application number: **82830207.5**

(22) Date of filing: **16.07.82**

(54) **Supporting device for the vertically movable window panel of a motor-vehicle window.**

(30) Priority: **22.07.81 IT 6801581**

(43) Date of publication of application:
**26.01.83 Bulletin 83/04**

(45) Publication of the grant of the patent:
**15.10.86 Bulletin 86/42**

(84) Designated Contracting States:
**DE FR GB NL SE**

(56) References cited:
**DE-A-3 108 244**
**FR-A-2 037 172**
**FR-A-2 242 550**
**GB-A-2 099 897**
**JP-A-56 095 475**
**US-A-3 777 579**
**US-A-4 026 088**

(73) Proprietor: **FIAT AUTO S.p.A.**
**Corso Giovanni Agnelli 200**
**I-10135 Torino (IT)**

(72) Inventor: **Gianotti, Giovanni**
**Via Don Bertolino 36**
**I-10092 Beinasco (Torino) (IT)**

(74) Representative: **Jacobacci, Filippo et al**
**c/o JACOBACCI-CASETTA & PERANI S.p.A.**
**Via Alfieri 17**
**I-10121 Torino (IT)**

Courier Press, Leamington Spa, England.

## Description

The present invention relates to a supporting device for a vertically movable window panel of a motor-vehicle window, said device comprising two intermediate support elements operatively connected to said panel in spaced relation to each other, said support elements being secured to said panel at points located within the periphery of the panel, the points of connection of said intermediate support elements to said panel occupying only a portion of the panel area; and a vertically movable slide member carrying said panel and having two projecting arms on which said support elements are slidably mounted along substantially horizontal directions.

An example of such a device is disclosed in US—A—3 777 579. The disclosed device includes a deformable parallelogram which controls the raising and the lowering of the window panel. The latter is connected to the paralellogram by means of rollers mounted on intermediate supports. These supports are fixed to the window by zone of adhesion while the rollers are freely slidable in two slideways integral with one of the arms of the parallelogram, articulated, by shafts, to two adjacent apices of said parallelogram.

This arrangement is relatively heavy and awkward. Moreover, the supports are fixed by glueing on the window panel, and this operation requires long time. Finally this way of fixing the supports onto the window panel renders its replacement very difficult.

The present invention seeks to obviate the above-mentioned drawbacks, by providing a supporting device characterized in that said vertically movable slide member is slidably mounted on a substantially vertical fixed guide rail said rail mounted on the structure of the motor vehicle, and in that each of said support elements is constituted by a unitary body of plastic material having a resiliently deformable lug on one face, which is snap engaged in a corresponding hole in the panel, and a guide groove on the opposite face, which is slidably engaged on one of said projecting arms of said slide member.

Further advantages of a preferred embodiment of the present invention will emerge from the following description with reference to the appended drawings, provided purely by way of non-limiting examples, in which

Figure 1 is a front view of a supporting device according to the present invention, and

Figure 2 is a cross sectional view taken on line II—II of Figure 1.

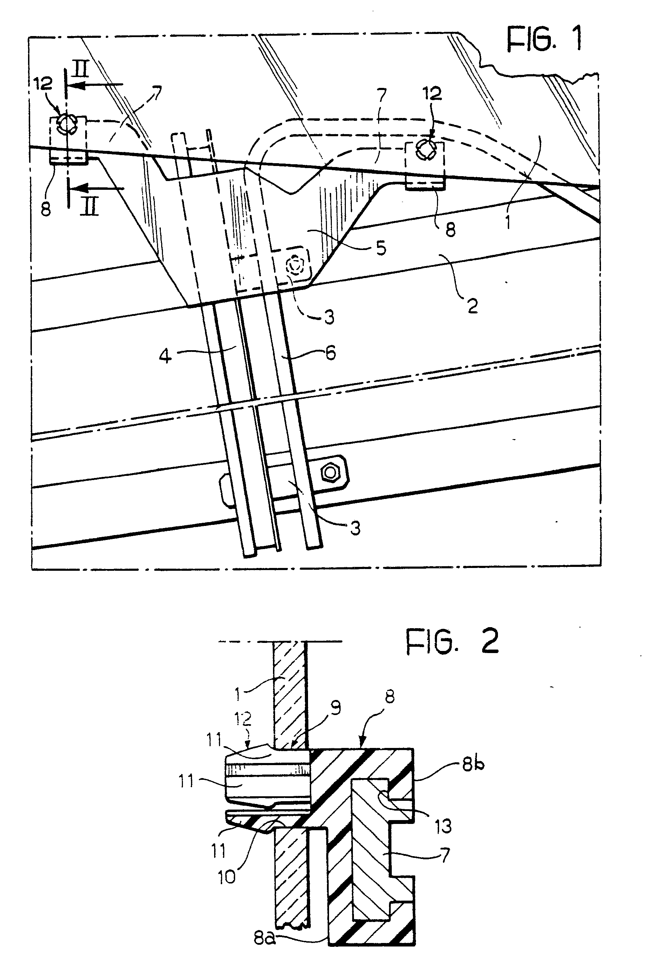

In Figure 1 reference numeral 1 indicates a vertically movable window panel (partially illustrated) of the window of a motor vehicle door. Reference numeral 2 indicates the internal frame of the door.

A guide element 4 is fixed on the frame 2 by means of two brackets 3, and a slide member 5 which carries the window panel is mounted on the guide element 4 for sliding movement in a substantially vertical direction. The vertical displacements of the slide member relative to the guide member 4 are controlled in a manner known per se by means of a flexible cable housed in a tubular casing 6. The structure and the disposition of the flexible cable, its casing and the transmission means connecting the flexible cable to the slide member 5 are not illustrated since they are known per se. Also the elimination of these constructional details from the drawings makes the latter more easy to understand.

The slide member 5 has two arms 7 which extend in a direction substantially perpendicular to the direction of sliding of the slide member 5 on the guide element 4. On these arms 7 are slidably mounted two support elemets 8 to which the window panel 1 is fixed.

With reference to Figure 2, each support element 8 is constituted by a unitary body of plastics material having on face 8a thereof a resiliently deformable lug 9 which can be snap engaged in a corresponding hole 10 in the window panel 1.

In the embodiment illustrated in Figure 2, each resiliently deformable lug 9 is constituted by a circumferential series of tabs 11 disposed so as to give the lug 9 a tubular conformation with an enlarged, frusto-conical head 12.

The plastics body of each support element 8 also has, on its face 8b opposite the face 8a, a through-groove 13 of a substantially T-section engaged in a slidable manner on the free end of the corresponding arm 7 which has a form complementary to that of the groove 13.

The fixing of the window panel 1 on the slide member 5 is effected easily and rapidly by the prior arrangement of the support elements 8 on the arms 7 of the slide member 5 and the snap insertion of the lugs (9) in the corresponding holes 10 in the window panel 1.

Thanks to the two support elements 8 slidably mounted on the slide member 5, assembly of the window panel 1 can be effected even when the distance between the two holes 10 of the window panel differs from that specified because of a defect in manufacture.

Furthermore, once the window panel 1 is mounted on the slide member 5, the window panel is displaceable horizontally relative to the slide member 5 by sliding of the support elements 8 on the arms 7 of the slide member. This allows the vertical edges of the window panel to be inserted easily in the corresponding guides of the door of the vehicle even when the distance between these guides is different from the intended distance because of errors in the pressing of the door.

## Claim

Supporting device for a vertically movable window panel (1) of a motor vehicle window, said device comprising:

two intermediate support elements (8) operatively connected to said panel (1) in spaced relation to each other, said support elements (8) being secured to said panel (1) at points located within the periphery of the panel (1), the points of connection of said intermediate support elements to said panel occupying only a portion of the panel area; and

a vertically movable slide member (5) carrying said panel (1) and having two projecting arms (7) on which said support elements (8) are slidably mounted along substantially horizontal directions;

characterized in that:

said vertically movable slide member (5) is slidably mounted on a substantially vertical fixed guide rail (4), said rail (4) mounted on the structure (2) of the motor vehicle and in that

each of said support elements (8) is constituted by a unitary body of plastic material having a resiliently deformable lug (9) on one face, which is snap engaged in a corresponding hole in the panel (1), and a guide groove (13) on the opposite face, which is slidably engaged on one of said projecting arms (7) of said slide member (5).

## Patentanspruch

Stützvorrichtung für eine senkrecht bewegbare Scheibe eines Kraftfahrzeugfensters, umfassend zwei Zwischenträgerelemente (8), die mit Abstand zueinander mit der Scheibe (1) in Wirkverbindung stehen, wobei die Trägerelemente (8) mit der Scheibe (1) an Stellen verbunden sind, die innerhalb der Peripherie der Scheibe liegen, wobei ferner die Verbindungsstellen dieser Zwischenträgerelemente mit der Scheibe nur einen Teil der Scheibenfläche einnehmen, sowie ferner umfassend einen vertikal beweglichen Gleitschlitten (5), welcher die Scheibe (1) trägt und mit zwei abstehenden Armen (7) versehen ist, auf denen die Trägerelemente (8) im wesentlichen in horizontalen Richtungen verschiebbar angeordnet sind, dadurch gekennzeichnet, daß der vertikal bewegliche Gleitschlitten (5) verschiebbar auf einer im wesentlichen vertikalen, festen Führungsschiene (4) angeordnet ist, wobei diese Schiene (4) an der Struktur (2) des Kraftfahrzeugs befestigt ist, und daß die Trägerelemente (8) jeweils durch einen einstückigen Körper aus Plastikmaterial gebildet sind, welcher an einer Seite einen federnd verformbaren Vorsprung (9) aufweist, der in eine zugeordnete Öffnung in der Scheibe (1) eingerastet wird, und welcher an der Gegenseite eine Führungsnut (13) aufweist, die verschiebbar einen der abstehenden Arme (7) des Gleitschlittens (5) umgreift.

## Revendication

Dispositif de support pour une vitre (1) mobile verticalement d'une fenêtre d'automobile, dispositif qui comprend:

deux éléments de support intermédiaires (8) attachés à distance l'un de l'autre à la vitre (1), en des points situés à l'intérieur du périmètre de celle-ci, les points d'attache des éléments de support intermédiaires à la vitre occupant seulement une partie de la surface de la vitre; et

une pièce (5) coulissant verticalement, qui porte la vitre (1) et possède deux bras saillants (7) sur lesquels les éléments de support (8) sont montés coulissants suivant des directions à peu près horizontales,

caractérisé en ce que:

la pièce (5) coulissant verticalement est montée coulissante sur une glissière de guidage à peu près verticale (4) qui est montée fixe sur la structure (2) de l'automobile et que

chacun des éléments de support (8) est constitué par une pièce en plastique d'un seul tenant, portant sur une face un tenon (9) élastiquement déformable, lequel est encliqueté dans un trou correspondant de la vitre (1), et présentant dans la face opposée une rainure de guidage (13) par laquelle l'élément de support est disposé coulissant sur l'un des bras saillants (7) de la pièce coulissante (5).

0 070 815

FIG. 1

FIG. 2